# EUROPÄISCHE PATENTSCHRIFT

(11) **EP 1 999 223 B1**
(45) Veröffentlichungstag und Bekanntmachung des Hinweises auf die Patenterteilung: **04.09.2013**
(21) Anmeldenummer: 07703126.8
(22) Anmeldetag: 30.01.2007
(51) Int. Cl.: C09J 121/00, C09J 153/00, C09J 153/02

(54) **HOCHFESTE, SCHLAGSCHÄLFESTE KLEBSTOFFE**
HIGH STRENGTH ADHESIVES WITH IMPACT PEEL STRENGTH
ADHESIF HAUTEMENT RESISTANCE, RESISTANT AU DECOLLEMENT

(30) Priorität: 24.03.2006 DE 102006014190
(43) Veröffentlichungstag der Anmeldung: 10.12.2008
(73) Patentinhaber: Henkel AG & Co. KGaA, 40589 Düsseldorf (DE)
(72) Erfinder: RAPPMANN, Klaus, 69469 Weinheim-Rittenweier (DE); KOHLSTRUNG, Rainer, 68723 Plankstadt (DE)
(86) Internationale Anmeldenummer: PCT/EP2007/000771
(87) Internationale Veröffentlichungsnummer: WO 2007/110119

(56) Entgegenhaltungen:
- EP-A- 0 943 673
- EP-A1- 0 441 244
- WO-A-02/48252
- US-A- 5 576 388

## Beschreibung

Die vorliegende Erfindung betrifft eine einkomponentige, heißhärtende reaktive Zusammensetzung auf der Basis von natürlichen und/oder synthetischen olefinische Doppelbindungen enthaltenden Elastomeren und Vulkanisationsmitteln sowie deren Verwendung als einkomponentiger Klebstoff, Dichtstoff, Versiegelungsmasse oder Beschichtungsmasse im Fahrzeugbau, insbesondere im Automobilrohbau.

Im Maschinen-, Fahrzeug- oder Gerätebau, insbesondere im Flugzeugbau, Schienenfahrzeugbau oder Kraftfahrzeugbau werden die Bauteile aus den verschiedenen metallischen Komponenten und/oder Verbundwerkstoffen in zunehmendem Maße mit Hilfe von Klebstoffen gefüge. Für strukturelle Klebungen werden dabei hohe Anforderungen an die Festigkeit des Klebeverbundes gestellt. Hochfeste und gleichzeitig schlagzähe, schälfeste und schlagschälfeste Klebstoffe, die heute für die Anwendung im Automobilrohbau eingesetzt werden, sind bisher hauptsächlich auf Basis von Epoxiden und Elastomer-modifizierten Epoxiden bzw. Acrylaten bekannt.

Dabei werden diese heißhärtenden, reaktiven Klebstoffe (oft auch als Heißschmelzklebstoffe formuliert) für Bördelnahtverklebungen bzw. überlappende Klebungen im Rohbau auf beöltes Blech aufgetragen und gefügt. Die Aushärtung der hierbei eingesetzten Klebstoffe oder Dichtstoffe erfolgt später in den Lacktrockenöfen. Vorher durchlaufen die geklebten bzw. abgedichteten oder versiegelten Teile Reinigungs-, Phosphatier- und Tauchgrundierungsstufen. Durch die in diesen Stufen verwendeten Behandlungsmittel können die Kleb- bzw. Dicht-oder Versiegelungsmittel aus den Klebefugen gespült werden. Um dieses zu verhindern, wird das Kleb-, Dicht- oder Versiegelungsmittel mittels Vorhärtungsmechanismen wie zum Beispiel mit Induktionsheizungen, Rohbauöfen, Infrarot-Strahlern vorgehärtet bzw. rheologisch entsprechend eingestellt, um die nachfolgende Vorbehandlung zu überstehen, ohne ausgewaschen zu werden. Zusätzlich können Schweißpunkte zur Versteifung der Karosserieteile gesetzt werden. Die Aushärtung der Klebstoffe erfolgt beim Durchlaufen der anschließenden Lacköfen (für den Kathodischen Tauchlack (KTL), Füller, Decklack).

Aus der EP-A-0 308 664 sind Epoxidharz-Zusammensetzungen bekannt, die ein Epoxid-Addukt eines carboxylgruppenhaltigen Copolymeren auf Basis von Butadien-Acrylnitril oder ähnlichen Butadiencopolymeren enthalten sowie ein Umsetzungsprodukt eines in Epoxidharzen löslichen oder dispergierbaren elastomeren Prepolymeren mit endständigen Isocyanatgruppen mit einem Polyphenol oder Aminophenol sowie nachfolgender Umsetzung dieses Adduktes mit einem Epoxidharz. Weiterhin können diese Zusammensetzungen ein oder mehrere Epoxidharze enthalten. Fernerhin werden zur Härtung für diese Zusammensetzungen aminofunktionelle Härter, Polyaminoamide, Polyphenole, Polycarbonsäuren und ihre Anhydride oder katalytische Härtungsmittel und gegebenenfalls Beschleuniger vorgeschlagen. Es wird angegeben, dass diese Zusammensetzungen sich als Klebstoffe eignen, die je nach konkreter Zusammensetzung hohe Festigkeit, hohe Glasübergangstemperatur, hohe Schälfestigkeit, hohe Schlagzähigkeit oder hohe Rissfortpflanzungsbeständigkeit haben können.

Die EP-A-338985 beschreibt modifizierte Epoxidharze, die ein flüssiges Copolymeres auf der Basis von Butadien, einem polaren, ethylenisch ungesättigten Comonomeren und ggf. weiteren ethylenisch ungesättigten Comonomeren enthalten und weiterhin ein Umsetzungsprodukt aus dihydroxyterminierten bzw. diaminoterminierten Polyalkylenglycolen und Diisocyanaten sowie einem Monophenol, einem Mercaptoalkohol oder einem aliphatischen Lactam. Gemäß der Lehre dieser Schrift lassen sich diese Zusammensetzungen zur Flexibilisierung von Epoxidharzen einsetzen. Zusätzlich zu den vorgenannten Bestandteilen sollen diese Zusammensetzungen noch Epoxidharze und einen Härter bzw. Beschleuniger enthalten. Derartige Gemische sollen sich als Klebstoffe, Klebefilme, Patches, Matrixharze, Lacke oder Dichtungsmassen verwenden lassen.

Die WO01/94492 beschreibt Kondensationsprodukte aus cyclischen Carbonsäure-anhydriden von Dicarbonsäuren, Tricarbonsäureanhydriden oder Tetracarbonsäureanhydriden und difunktionellen Polyaminen, insbesondere Polyoxyalkylenaminen als Aufbaukomponenten für Epoxidharzzusammensetzungen. Die Kondensationsprodukte auf Basis von Tricarbonsäureanhydriden oder Tetracarbonsäureanhydriden zeichnen sich durch im Mittel mehr als eine Imidgruppe und Carboxylgruppe pro Molekül aus. Ggf. können noch Kondensationsprodukte aus tri- oder mehrfunktionellen Polyolen und/oder tri- oder mehrfunktionellen aminoterminierten Polymeren und cyclischen Carbonsäureanhydriden in den Zusammensetzungen enthalten sein. Zusätzlich enthalten diese Zusammensetzungen übliche kautschukmodifizierte Epoxidharze sowie flüssige und/oder feste Polyepoxydharze und übliche Härter und Beschleuniger und ggf. Füllstoffe und Rheologiehilfsmittel. Es wird vorgeschlagen, diese modifizierten Epoxidharzzusammensetzungen als schlagfeste, schlagschälfeste und schälfeste Klebstoffe im Fahrzeugbau und in der Elektronik einzusetzen, insbesondere da sie bei sehr tiefen Temperaturen sehr gute Schlag- und Schäl-Eigenschaften aufweisen sollen und eine sehr gute Korrosionsbeständigkeit und Alterungsbeständigkeit der Klebung gewährleisten sollen.

JP 2000-313786 A beschreibt eine schlagfeste Acrylharz-Zusammensetzung enthaltend ein (Meth)acrylatpolymer als Komponente A und ein Elastomermodifiziertes Acrylatharz als Komponente B. Dabei soll die Komponente B als teilchenförmiges Material mit 0,2 bis 10 µm durchschnittlicher Teilchengröße als disperse Phase vorliegen, die mit einer kontinuierlichen Phase der Komponente A umgeben ist. Dabei soll das Verhältnis des Volumens der Komponente A zum Volumen der Komponente B 0,5 bis 4 betragen und mindestens ein Teil der Komponente A soll chemisch an einen Teil der Komponente B gebunden sein. Es wird angegeben, dass diese Harzzusammensetzungen eine verbesserte Schlagfestigkeit bei gleichzeitig gegebener guter Alterungsbeständigkeit aufweisen soll.

In ähnlicher Weise beschreibt JP 2000-319475 A eine schlagfeste Harzzusammensetzung aus einer (Meth)acrylatcopolymerkomponente A und einer modifizierten Polyurethan-Elastomer-Komponente B. Hier soll die Polyurethan-Elastomer-Komponente B als diskontinuierliche dispergierte Phase in der kontinuierlichen Phase A vorliegen, wobei die disperse Phase eine Struktur aufweist, die eine Mikrophasenseparation hat. Es soll hier wiederum zumindest ein Teil der Komponente A chemisch an einen Teil der Komponente B gebunden sein. Es wird vorgeschlagen einen Acrylatsirup C unter Scherung anzupolymerisieren, so dass die Phasenseparation folgt. Diese Harzzusammensetzungen sollen eine verbesserte Schlagfestigkeit aufweisen, ohne die Alterungsbeständigkeit und Witterungsbeständigkeit zu verschlechtern.

EP 0270318 A2 beschreibt eine modifizierte Zusammensetzung für die Anwendung als Strukturklebstoff. Diese Klebstoff-Zusammensetzungen enthalten einen Flüssigkautschuk mit olefinisch ungesättigten Endgruppen, der mit einer Monoisocyanat-Komponente umgesetzt worden ist. Es wird vorgeschlagen, zur Herstellung dieser flüssigen Elastomeren Carboxyl-terminiertes Polybutadien oder ein Polybutadien-Acrylnitril- oder Polybutadien-Methacrylnitril-Styrol- Copolymer mit Glycidylmethacrylat umzusetzen und anschließend die entstandenen sekundären Hydroxylgruppen mit Monoisocyanat-Verbindungen umzusetzen. Derartig modifizierte flüssige Elastomere mit olefinischen Endgruppen werden dann mit olefinisch ungesättigten Monomeren, ausgewählt aus Acrylsäure-Estern, Acrylsäure, Styrol, substituierten Styrol, und freiradikalischen Initiatoren gemischt, um einen bei Raumtemperatur härtbaren Strukturklebstoff bereitzustellen. Es wird angegeben, dass derartige Klebstoff-Zusammensetzungen, im Vergleich zu anderen Strukturklebstoffen auf der Basis von Acrylatmonomeren, eine verbesserte Alterungsbeständigkeit und verbesserte Tieftemperatureigenschaften aufweisen.

WO 02/070619 beschreibt elastische (Meth)acrylatklebstoff-Zusammensetzungen mit hoher Bruchdehnung. Gemäß dieser Schrift sollen die Klebstoffzusammensetzungen mindestens ein monofunktionelles (Meth)acrylatmonomer A aufweisen, dessen Homopolymer oder Copolymer eine Glasübergangstemperatur zwischen 40°C und 140°C aufweist. Weiterhin soll die Zusammensetzung ein monofunktiorielles (Meth)acrylatmonomer B mit der nachfolgenden Struktur enthalten:

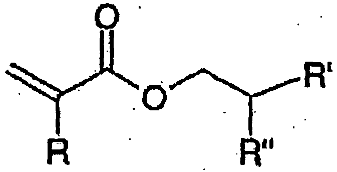

Hierin soll R Wasserstoff oder eine Methylgruppe sein, R' ist Wasserstoff oder C₁ bis C₃-Alkyl, insbesondere Wasserstoff oder Ethyl und R" soll eine C₃-C₂₀-Alkylgruppe oder eine Phenoxygruppe oder eine Alkoxygruppe sein. Als weitere Komponente soll ein Elastomer mit einem Molekulargewichtbereich zwischen 1000 und 9000 mit (Meth)acrylatischen Gruppen in der Zusammensetzung anwesend sein. Diese Schrift gibt an, dass die dort offenbarten Zusammensetzungen besonders geeignet sind zum Kleben von Materialien mit unterschiedlichen thermischen Expansions-Koeffizienten wie sie zum Beispiel in der Fahrzeugindustrie Einsatz finden. Exemplarisch genannt ist die Klebung von Seitenblechen von Trailern oder die Direktverglasung. Es wird angegeben, dass diese Zusammensetzungen eine sehr hohe Schlagfestigkeit bei tiefen Temperaturen aufweisen.

In der US-5,576,388 werden mehrkomponentige Kontaktklebstoffzusammensetzungen beschrieben, die nach einen zweifachen Härtungsmechanismus aushärten.

In der EP-A-0 943 673 werden Schmelzklebstoffzusammensetzungen offenbart, die ein thermoplastisches Elastomer mit einer spezifischen intrinsischen Viskosität und einen flüssigen Weichmacher enthalten und als industrielles Dichtungsmaterial verwendet werden.

In der EP-A-0 441 244 werden Strukturklebstoffe offenbart, die ein funktionelles Dienpolymer mit niederem Molekulargewicht sowie gegebenenfalls ein weiteres Polymer enthalten können und mit einem Schwefel-haltigen Vulkanisationssystem vernetzt werden.

Nachteite der vorgenannten Klebstoffe auf Epoxid- oder (Meth)acrylat-Basis sind:
- hohe Rohstoffkosten,
- die Kennzeichnung (meistens mit Xi),
- bedingte Ölaufnahme,
- mangelnder Korrosionsschutz
- mangelnde Alterungsbeständigkeit

Es sind auch hochfeste Klebstoffe auf Kautschukbasis bekannt geworden.

Die WO 96/23040 beschreibt einkomponentige, hitzehärtende Strukturklebstoffe auf der Basis von Flüssigkautschuken, die gegebenenfalls anteilig funktionelle Gruppen enthalten können, Festkautschuken, thermoplastischen Polymerpulvern und Schwefel sowie Vulkanisationsbeschleunigern. Diese eignen sich zum Verkleben von Metallteilen. Es können Zugscherfestigkeiten von über 15 MPa bei gleichzeitiger hoher Bruchdehnung von über 15 % erhalten werden. Diese Klebstoffe sind im Wesentlichen frei von niedermolekularen Epoxidharzen und eignen sich insbesondere für den Einsatz im Rohbau in der Automobilindustrie.

Aus der WO99/03946 sind warm pumpbare, heißhärtende Massen auf Basis von Ethylen-Vinylacetat-Copolymeren (EVA), enthaltend mindestens ein festes EVA-Copolymer mit einem Erweichungspunkt über 50 °C, gemessen nach der Ring & Ball-Methode nach ASTM D 28, mindestens einen flüssigen reaktiven Weichmacher mit olefinisch ungesättigten Doppelbindungen und mindestens ein peroxidisches Vernetzungsmittel, bekannt. Nach den Angaben dieser Schrift eigenen sich diese Zusammensetzungen als Versiegelungsmittel von Fein- und Grobnähten im Fahrzeugbau. Bei Zusatz von Treibmitteln lassen sich diese auch als Unterfütterungsklebstoffe einsetzen. Die bevorzugten Einsatzgebiete sind im Rohbau bei der Fertigung von Automobilen.

WO02/48252 offenbart heißhärtende, reaktive Zusammensetzungen auf der Basis von natürlichen und/oder synthetischen olefinische Doppelbindungen enthaltenden Elastomeren auf der Basis von flüssigen Polyenen, und ggf. Festkautschuken. Das Vulkanisations-System besteht aus Schwefel und/der Metalloxiden und einem oder mehreren organischen Beschleunigern, die eine oder mehrere hetero-cyclische Verbindungen enthalten, die mindestens 2 Stickstoffatome im Ring haben. Diese Zusammensetzungen lassen sich unter Vermeidung bzw. starker Reduktion der Geruchsbelästigung durch Schwefel und Schwefelverbindungen vulkanisieren. Es wird angegeben, dass sich diese Zusammensetzungen als Klebstoffe, Dichtstoffe oder Beschichtungsmassen, insbesondere im Automobilbau eignen.

Aus der WO02/48255 sind heißhärtende reaktive Zusammensetzungen auf der Basis von natürlichen und/oder synthetischen olefinische Doppelbindungen enthaltenden flüssigen Elastomeren und Vulkanisationsmitteln, die neben herkömmlichen, flüssigen Polyenen mindestens ein flüssiges cis-1,4-Polyisopren mit einem Molekulargewicht zwischen 20 000 und 70 000 sowie ein Vulkanisationssystem aus Schwefel, Beschleunigern und Chinonoximen enthalten, bekannt. Diese Klebstoffe zeigen ein Plastisol-artiges Fließverhalten, so dass sie bei Raumtemperatur mit herkömmlichen Spritzanlagen applizierbar sind. Es wird angegeben, dass sich diese Zusammensetzungen als Nahtabdichtungs- und Versiegelungsmasse, als Unterfütterungsklebstoff sowie als Strukturklebstoff wie z. B. als Bördelnahtklebstoff eignen sollen.

Die hochfesten Klebstoffe des vorgenannten Standes der Technik auf Kautschukbasis haben jedoch den Nachteil, dass sie keinerlei schlagzähe Eigenschaften, insbesondere auch bei tiefen Temperaturen aufweisen, da sie insbesondere bei tiefen Temperaturen, vermutlich aufgrund des hohen Vernetzungsgrades, verspröden.

Aufgabe der vorliegenden Erfindung war daher, hochfeste und gleichzeitig schlagzähe, schälfeste und schlagschälfeste Klebstoffe bereitzustellen, die für die Anwendung im Automobilrohbau eingesetzt werden können und die nicht Epoxidharze oder (Meth)acrylatharze als wesentlichen Bestandteil enthalten.

Die erfindungsgemäße Lösung der Aufgabe ist den Patentansprüchen zu entnehmen. Sie besteht im wesentlichen in der Bereitstellung einer einkomponentigen, heißhärtenden reaktiven Zusammensetzung auf der Basis von natürlichen und/oder synthetischen, olefinische Doppelbindungen enthaltenden, Elastomeren und Vulkanisationsmitteln, die
a) mindestens ein flüssiges Polyen mit einem Molekulargewicht zwischen 400 und 80.000, vorzugsweise zwischen 800 und 25.000,
b) mindestens ein Blockcopolymer mit mindestens einem Polyenblock und mindestens einem gesättigten Block und
c) ein Vulkanisationssystem aus Schwefel und Beschleunigern und/oder aus Chinonoximen enthalten.

In einer bevorzugten Ausführungsform hat der gesättigte Block des Blockcopolymers b) eine Glasübergangstemperatur von niedriger als -30°C.

Ein weiterer Gegenstand der vorliegenden Erfindung ist die Verwendung der vorgenannten heißhärtenden, reaktiven Zusammensetzungen als einkomponentiger Klebstoff, Dichtstoff oder Beschichtungsmasse oder Versiegelungsmasse im Automobilrohbau.

Das oder die flüssigen Polyen(e) oder Elastomere a) enthalten dabei pro Molekül mindestens eine olefinisch ungesättigte Doppelbindung. Sie können dabei aus der folgenden Gruppe der Homo- und/oder Copolymeren ausgewählt werden:
Polybutadiene, insbesondere die 1,3- und 1,2-Poly-butadiene, Polybutene, Polyisobutylene, 1,4- und 3,4-Polyisoprene, Styrol-Butadien-Copolymere, Butadien-Acrylnitril-Copolymere, wobei eines oder mehrere dieser Polymeren endständige und/oder (statistisch verteilte) seitenständige funktionelle Gruppen haben können. Beispiele für derartige funktionelle Gruppen sind Hydroxy-, Amino-, Carboxyl-, Carbonsäureanhydrid- oder Epoxygruppen. Das Molekulargewicht dieser Flüssigkautschuke ist typischerweise unterhalb von 80 000 und oberhalb von 400, vorzugsweise zwischen 800 und 25 000. Der Anteil an Flüssigkautschuk an der Gesamtzusammensetzung hängt dabei von der gewünschten Rheologie der ungehärteten Zusammensetzung und der erwünschten mechanischen Steifigkeit oder Festigkeit des Verbundes und den akustischen Dämpfungseigenschaften der ausgehärteten Zusammensetzung ab. Der Anteil an flüssigem Kautschuk bzw. Elastomer variiert normalerweise zwischen 2 und 55 Gew.-% der Gesamtformulierung. Dabei hat es sich als zweckmäßig erwiesen, vorzugsweise Mischungen von Flüssigkautschuken unterschiedlicher Molekulargewichte und unterschiedlicher Konfiguration in Bezug auf die restlichen Doppelbindungen einzusetzen. Außerdem können als Copolymere sowohl Blockcopolymere als auch solche mit statistischer Verteilung der Comonomeren eingesetzt werden. Zur Erzielung optimaler Haftung auf den diversen Substraten wird in den besonders bevorzugten Formulierungen anteilig eine Flüssigkautschukkomponente, mit Hydroxylgruppen bzw. Säureanhydridgruppen eingesetzt.

Zusätzlich kann die erfindungsgemäße Klebstoff-Zusammensetzung auch noch einen Anteil an Festkautschuken enthalten. Geeignete Festkautschuke haben im Vergleich zu den Flüssigkautschuken ein signifikant höheres Molekulargewicht (MW=100000 oder höher). Beispiele für geeignete Kautschuke sind Polybutadien, vorzugsweise mit einem sehr hohen Anteil an cis-1,4-Doppelbindungen (typischerweise über 95%), Styrol-Butadienkautschuk, Butadien-Acrylnitrilkautschuk, synthetischer oder natürlicher Isoprenkautschuk, Butylkautschuk oder Polyurethankautschuk. Der Anteil an Festkautschuk kann dabei bis zu 18 Gew.-% betragen, vorzugsweise liegt er zwischen 0,5 und 15 Gew.-% und ganz besonders bevorzugt zwischen 1,4 und 12 Gew.-%.

Festkautschuke ausgewählt aus der Gruppe cis-1,4-Polybutadien, Styrol-Butadien-Kautschuk, synthetischer Isoprenkautschuk, Naturkautschuk, Ethylen-Propylen-Dien-Kautschuk (EPDM), Nitrilkautschuk, Butylkautschuk, Acrylkautschuk oder Polychloropren können bevorzugt sein.

Bei den Blockcopolymeren b) kann es sich um Blockcopolymere des AB-, ABA- oder BAB-Typs handeln, wobei A den Polyenblock und B den gesättigten Block darstellt. Die Blockcopolymeren b) können auch mehr als drei Comonomerblöcke A und B enthalten, sie können beispielsweise eine ABABA-Struktur oder höhergradige Blockstrukturen aufweisen. Als Blockcopolymere b) können auch Pfropfcopolymere eingesetzt werden. Dabei soll der gesättigte Block eine Glasübergangstemperatur (T_{g}) unterhalb der Raumtemperatur aufweisen, vorzugsweise soll die Tg niedriger als -30°C sein.

Der gesättigte Block des Blockcopolymers b) ist vorzugsweise aus Ethylen-Propylen-Dien-Einheiten (EPDM-), Ethylenvinylacetat-Einheiten (EVA-), Polyether, Polyester-, Polyamid-, Polyimid-, Polyurethan-, Polyacrylat-, Polystyrol-Copolymer-Einheiten oder Einheiten auf der Basis von hydrierten Acrylnitril-Butadien-Styrol-Copolymeren aufgebaut. Besonders bevorzugt sind dabei Blöcke aus Polyoxyalkylen-, Polydialkylsiloxan-, Pölydiarylsiloxan-, Polyalkyl-arylsiloxan-polyethermodifizierten Polydimethylsiloxan-, Poly(ethylen-propylen)-, Poly(ethylen-butylen)- oder Polyisobutylen-Einheiten, SEPS-(Styrol-Ethylen-Propylen-Styrol)-, SEEPS-(Styrol-Ethylen-Ethylen-Propylen-Styrol)- oder SEBS-(Styrol-Ethylen-Butylen-Styrol)-Copolymer-Einheiten.

Konkrete Beispiele für Polyoxyalkylene sind dabei Polyoxyethylene, Polyoxypropylene, oder Polyoxybutylene (Polytetrahydrofurane) sowie Copolymere aus Ethylenoxid, Propylenoxid und/oder Tetrahydrofuran. AlsPolydialkylsiloxan-Blöcke können insbesondere Polydimethylsiloxane, Polydiethylsiloxane oder Polydipropylsiloxane, als Polydiarylsiloxane hauptsächlich Polydiphenylsiloxane sowie als Polyalkyl-arylsiloxane Polymethylphenylsiloxane, Polyethylphenylsiloxane, Polypropylphenylsiloxane Verwendung finden.

Der ungesättigte Block des Blockcopolymers b) ist aus Polybutadien-, Polyisopren-, oder Butylkautschuk-Einheiten, sowie Copolymer-Einheiten des Butadiens und/oder Isoprens mit Styrol und/oder Acrylnitril, oder Copolymer-Einheiten von Acrylsäureestern mit Dienen aufgebaut. Dabei weist der ungesättigte Block des Blockcopolymers einen Molekulargewichtsbereich von 800 bis 15 000, vorzugsweise zwischen 1200 und 9000 auf und der gesättigte Block weist einen Molekulargewichtsbereich von 500 bis 90 000, vorzugsweise zwischen 1000 und 40 000 auf. Das (Gewichts)-verhältnis von ungesättigtem Block zu gesättigtem Block (jeweils Summe aller jeweiligen Blöcke) kann in weiten Grenzen variiert werden, vorzugsweise beträgt es 100 : 1 bis 1 : 20

Bei allen vorgenannten und nachfolgenden Angaben der Molekulargewichtsbereiche handelt es sich um die Zahlenmittel der Molekulargewichte, falls nichts anderes angegeben ist.

Die Block- bzw. Pfropfcopolymere werden durch Umsetzung von flüssigen bzw. viskosen, verzweigten und/oder unverzweigten Polyenen mit Polymeren erhalten, die nicht oder nur bedingt mit Schwefel vernetzbar sind. Dabei können die Polyene zusätzliche funktionelle Gruppen aufweisen, die endständig und/oder statistisch oder regelmäßig in der Polymerkette verteilt sind. Die Polymerblöcke, die nicht oder nur bedingt mit Schwefel vernetzbar sind, sind im wesentlichen gesättigte Polymere. Diese können ebenfalls funktionelle Gruppen wie Hydroxylgruppen, Carboxylgruppen, Amingruppen, Vinylgruppen, Anhydridgruppen, Isocyanatgruppen, Carbonylgruppen oder Epoxygruppen aufweisen. Dabei können die vorgenannten funktionellen Gruppen zumindest anteilig zum Aufbau der Blockcopolymer- bzw. Pfropfcopolymer-Strukturen genutzt werden, um die Blöcke durch Kondensations- oder Additionsreaktionen zu bilden. Es kann jedoch auch die Blockcopolymer-Bildung durch freie radikalische Reaktionen erfolgen. In allen Fällen kann es.notwendig sein, Katalysatoren oder Initiatoren zur Hilfe zu nehmen.

Nicht durch Schwefel vernetzbare gesättigte Polymer- / Thermoplast-Blöcke im Sinne dieser Erfindung sind z.B.:
- Polyolefine mit funktionellen Endgruppen wie z.B. Hydroxyl-, Carboxyl-, Anhydrid-, Amin-, Vinyl-, Carbonyl-, Isocyanat-, Epoxy-Gruppen,
- EPDM,
- EVA,
- Polyether,
- Polyester,
- Polyamide,
- Polyimide,
- Polyurethane,
- Polystyrol insbesondere Acrylnitril-Butadien-Styrol-Copolymere
- Isocyanatprepolymere
- Polyacrylate mit funktionellen Endgruppen wie z.B. Hydroxyl-, Carboxyl-, Anhydrid-, Amin-, Vinyl-, Carbonyl-, Isocyanat-.
- Polyalkylsiloxane, Polyarylsiloxane, Polyalkylarylsiloxane mit oder ohne die oben genannten funktionellen Endgruppen. Die Viskositäten der Polysiloxane liegen zwischen 200 mPas und 100.000 Pas bei 22°C.
- PVC,
- Thermoplastische Polyurethane (TPU).

Der Anteil an Thermoplast im Copolymer kann bis zu 80 % betragen.

Die vorgenannten Polymerblöcke können linear und/oder verzweigt sein und ggf. auch zusätzliche funktionelle Gruppen der vorgenannten Art am Kettenende oder in der Polymerkette verteilt enthalten. Auch Mischungen der oben genannten Polymere sind möglich.

Weiterhin kann es bevorzugt sein, dass das Blockcopolymer b) hergestellt wird durch Umsetzung eines Maleinsäureanhydrid- modifizierten Polybutadiens mit einem Polydialkylsiloxan mit endständigen Hydroxyl- oder Amino- Gruppen, Polydiarylsiloxan mit endständigen Hydroxyl- oder Amino- Gruppen, Polyalkyl-arylsiloxan mit endständigen Hydroxyl- oder Amino- Gruppen, Polyoxyalkylendiol, OH-terminierten Polyolefin, insbesondere einem Poly(ethylen-propylen)- Poly(ethylen-butylen)- oder Polyisobutylen-diol oder durch Umsetzung eines Polybutadiens mit einem endständig und/oder seitenkettenständig Vinylgruppen und/oder Acrylatgruppen enthaltenden Polydialkylsiloxan, Polydiarylsiloxan oder Polyalkyl-arylsiloxan.

Weiterhin enthalten die erfindungsgemäßen einkomponentigen, heißhärtenden reaktiven Zusammensetzungen ein Vulkanisationssystem aus Schwefel und Beschleunigern und/oder Chinonoximen.

Für das Vulkanisationssystem eignen sich eine Vielzahl von Vulkanisationsmitteln in Kombination mit elementarem Schwefel, aber auch Vulkanisationssysteme ohne freien Schwefel. Zu letzteren zählen die Vulkanisationssysteme auf der Basis von Thiuramdisulfiden, organischen Peroxiden, polyfunktionellen Aminen, Chinonen, p-Benzochinondioxim, p-Nitrosobenzol und Dinitrosobenzol oder auch die Vernetzung mit (blockierten) Diisocyanaten. Ganz besonders bevorzugt sind jedoch Vulkanisationssysteme auf der Basis von elementarem Schwefel und organischen Vulkanisationsbeschleunigern sowie Zinkverbindungen. Der pulverförmige Schwefel wird dabei in Mengen von 4 bis 25 -%, bezogen auf die Gesamtzusammensetzung eingesetzt, besonders bevorzugt werden Mengen zwischen 7 und 14% eingesetzt. Als organische Beschleuniger eignen sich Dithiocarbamate (in Form ihrer Ammonium- bzw. Metallsalze), Xanthogenate, Thiuram-Verbindungen (Monosulfide und Disulfide), Thiazolverbindungen, Aldehyd/Aminbeschleuniger (z.B. Hexamethylentetramin) sowie Guanidinbeschleuniger, ganz besonders bevorzugt wird Dibenzothiazyldisulfid (MBTS) ), 2-Mercaptobenzthiazol (MBT), dessen Zinksalz (ZMBT), Zinkdibenzyldithiocarbamat (ZBEC), N-Cyclohexylbenzodithiazylsulfenamid (CBS) oder Diphenylguanidin. Für die Erzielung besonders hoher Temperatur- und Reversionsfestigkeit des Klebstoffes kann das Vulkanisationsgemisch auch bifunktionelle Vernetzer enthalten. Konkrete Beispiele sind Vernetzer auf Basis von bifunktionellen Dithiocarbamaten wie z.B. das 1,6-bis(N,N-dibenzylthiocarbamoyldithio)-hexan.

Erfindungsgemäß kann auch ein kombiniertes Vulkanisationssystem aus elementarem Schwefel, oben genannten organischen Beschleunigern und Chinondioximen eingesetzt werden. Beispielhaft erwähnt sei p-Benzochinondioxim es können jedoch auch andere Chinondioxime in Kombination mit den vorgenannten Schwefelsystemen eingesetzt werden. Diese organischen Beschleuniger werden in Mengen zwischen 0.25 und 5,5 Gew.-% bezogen auf die Gesamtformulierung, bevorzugt zwischen 0,5 und 3 Gew.-%, eingesetzt. Bei den als Beschleuniger wirkenden Zinkverbindungen kann zwischen den Zinksalzen von Fettsäuren, Zinkdithiocarbamaten, basischen Zinkcarbonaten sowie insbesondere feinteiligem Zinkoxid gewählt werden. Der Gehalt an Zinkverbindungen liegt im Bereich zwischen 0,5 und 10 Gew.-%, vorzugsweise zwischen 2 und 8 Gew.-%. Zusätzlich können weitere typische Kautschuk-Vulkanisationshilfsmittel wie Fettsäuren (z.B. Stearinsäure) in der Formulierung vorhanden sein.

Es kann bevorzugt sein, dass das Vulkanisationssystem aus 4 Gew.-% bis 25 Gew.-%, vorzugsweise 5 Gew.-% bis 15 Gew.-% pulverförmigem Schwefel, 0,25 Gew.-% bis 8 Gew.-%, vorzugsweise 0,4 Gew.-% bis 6 Gew.-% organischem Beschleuniger und 0,5 Gew.-% bis 10 Gew.%, vorzugsweise 1 Gew.-% bis 8 Gew.-% Zinkverbindungen, vorzugsweise Zinkoxid, besteht, wobei die Gew.% auf die Gesamtzusammensetzung bezogen sind.

Zusätzlich können die erfindungsgemäßen Zusammensetzungen für Kautschukmischungen übliche Füllstoffe, Beschleuniger, Vernetzungsmittel wie Schwefel und/oder Peroxide, Antioxidantien, Co-Aktivatoren und weitere Katalysatoren, Ruße, Treibmittel, Öle, Alterungsschutzmittel, Fasern ggf. auch Graphit, Rheologiehilfsmittel, Haftungsvermittler, Pigmente und thermoplastische Polymere enthalten.

Die Füllstoffe können aus einer Vielzahl von Materialien ausgewählt werden, insbesondere sind hier zu nennen Kreiden, natürliche oder gemahlene Calciumcarbonate, Calcium-Magnesiumcarbonate, Silikate, Talkum, Schwerspat sowie Ruß. Es kann ggf. zweckmäßig sein, dass zumindest ein Teil der Füllstoffe oberflächenvorbehandelt ist, insbesondere hat sich bei den verschiedenen Calciumcarbonaten bzw. Kreide eine Beschichtung mit Stearinsäure zur Verminderung der eingetragenen Feuchtigkeit und zur Verminderung der Feuchtigkeitsempfindlichkeit der ausgehärteten Zusammensetzung als zweckmäßig erwiesen. Die erfindungsgemäßen Zusammensetzungen können noch zwischen 0 und 8 Gew.-%, vorzugsweise zwischen 1 und 6 Gew.-%, an Calciumoxid enthalten. Der Gesamtanteil an Füllstoffen in der Formulierung kann zwischen 10 und 70 Gew.-% variierten, der Vorzugsbereich liegt zwischen 20 und 60 Gew.-%.

Gegen den thermischen, thermooxidativen oder Ozon - Abbau der erfindungsgemäßen Zusammensetzungen können konventionelle Stabilisatoren oder Alterungsschutzmittel, wie z.B. sterisch gehinderte Phenole (beispielsweise 2,2-Methylen-bis-(4-methyl-6-tert.-butylphenol)) oder Aminderivate eingesetzt werden, typische Mengenbereiche für diese Stabilisatoren sind 0,1 bis 2 Gew.-%.

Obwohl die Rheologie der erfindungsgemäßen Zusammensetzungen auch durch die Auswahl der Füllstoffe und das Mengenverhältnis der niedermolekularen Flüssigkautschuke in den gewünschten Bereich gebracht werden kann, können konventionelle Rheologiehilfsmittel wie z.B. pyrogene Kieselsäuren, Bentone oder fibrillierte oder Pulp-Kurzfasern im Bereich zwischen 0,1 und 7% oder auch hydrierte Ricinusöl-Derivate - bekannt z.B. unter dem Handelsnamen Rilanit (Fa. Cognis) - zugesetzt werden. Außerdem können weitere konventionelle Hilfs- und Zusatzmittel in den erfindungsgemäßen Zusammensetzungen Verwendung finden.

Zum Erzielen der Aufschäumung während des Härtungsvorganges können prinzipiell alle gängigen Treibmittel verwendet werden, vorzugsweise jedoch organische Treibmittel aus der Klasse der Azoverbindungen, N-Nitrosoverbindungen, Sulfonylhydrazide oder Sulfonylsemicarbazide. Für die erfindungsgemäß zu verwendenden Azoverbindungen seien beispielhaft das Azobisisobutyronitril und insbesondere das Azodicarbonamid genannt, aus der Klasse der Nitrosoverbindungen sei beispielhaft das Di-Nitrosopentamethylentetramin genannt, aus der Klasse der Sulfohydrazide das 4,4'-Oxybis-(benzolsulfonsäurehydrazid), das Diphenylsulfon-3,3'-disulfohydrazid oder das Benzol-1,3-disulfohydrazid und aus der Klasse der Semicarbazide das p-Toluolsulfonylsemicarbazid genannt.

An die Stelle der vorgenannten Treibmittel können auch die so genannten expandierbaren Mikrohohlkugeln ("expandable microspheres"), d.h. nicht expandierte thermoplastische Polymerpulver treten, die mit niedrigsiedenden organischen Flüssigkeiten getränkt bzw. gefüllt sind. Derartige "Microspheres" sind beispielsweise in der EP-A-559254, der EP-A-586541 oder der EP-A-594598 beschrieben. Obwohl nicht bevorzugt, können auch bereits expandierte Mikrohohlkugeln verwendet bzw. mit verwendet werden. Gegebenenfalls können diese expandierbaren/expandierten Mikrohohlkugeln in beliebigem Mengenverhältnis mit den oben genannten "chemischen" Treibmitteln kombiniert werden. Die chemischen Treibmittel werden in schäumbaren Zusammensetzungen in Mengen zwischen 0,1 und 3 Gew.-%, vorzugsweise zwischen 0,2 und 2 Gew.-%, die Mikrohohlkugeln zwischen 0,1 und 4 Gew.-%, vorzugsweise zwischen 0,2 und 2 Gew.-% verwendet.

Obwohl die erfindungsgemäßen Zusammensetzungen aufgrund des bevorzugten Gehaltes an Flüssigkautschuk mit funktionellen Gruppen in der Regel bereits eine sehr gute Haftung auf den Substraten haben, können, falls erforderlich, Klebrigmacher und/oder Haftvermittler zugesetzt werden. Hierzu eignen sich beispielsweise Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid enthaltende Copolymere. Auch der Zusatz von Polyepoxydharzen in geringen Mengen kann bei manchen Substraten die Haftung verbessern. Hierfür werden dann jedoch vorzugsweise die festen Epoxidharze mit einem Molekulargewicht von über 700 in fein gemahlener Form eingesetzt. Falls Klebrigmacher bzw. Haftvermittler eingesetzt werden, hängt deren Art und Menge von der Polymerzusammensetzung sowie dem Substrat, auf welches die Zusammensetzung appliziert wird, ab. Typische klebrigmachende. Harze (Tackifier) wie z.B. Terpenphenolharze oder Harzsäurederivate werden in Konzentrationen zwischen 5 und 20 Gew.-% verwendet, typische Haftvermittler wie Polyamine, Polyaminoamide oder Phenolharze oder Resorcinderivate werden im Bereich zwischen 0,1 und 10 Gew.-% verwendet.

Vorzugsweise sind die erfindungsgemäßen Zusammensetzungen frei von Weichmachern und Extenderölen. Es kann jedoch notwendig sein, die Rhenlogie der ungehärteten Zusammensetzung und/oder die mechanischen Eigenschaften der gehärteten Zusammensetzung durch Zugabe von sog. Extenderölen, d.h. aliphatischen, aromatischen oder naphtenischen Ölen zu beeinflussen. Vorzugsweise geschieht diese Beeinflussung jedoch durch zweckmäßige Auswahl der niedrigmolekularen Flüssigkautschuke oder durch die Mitverwendung von niedermolekularen Polybutenen oder Polyisobutylenen. Falls Extenderöle eingesetzt werden, werden Mengen im Bereich zwischen 2 und 15 Gew.-% verwendet.

Zur Erzielung hochfester, schlagschälfester und schälfester Kautschukmischungen enthalten die erfindungsgemäßen Zusammensetzungen vorzugsweise (Angabe in Gew.-%):

| Komponente | allgemeine Zusammensetzung | bevorzugte Zusammensetzung | besonders bevorzugte Zusammensetzung |
|---|---|---|---|
| Festkautschuk | 0 - 18 % | 0,5 - 15 % | 1,4 - 12 % |
| Polybutadien flüssig (MW = 900 - 10.000 g/mol) | 2 - 30 % | 3 - 23 % | 5 - 21 % |
| Polybutadien mit aktiven Carboxylgruppen (MW = 1000 -10.000 g/mol) | 0 - 25 % | 1 - 15 % | 3 - 10 % |
| Schwefel | 4 - 25 % | 5 - 15 % | 7,5 - 12 % |
| Beschleuniger bifunktionaler | 0,25 - 8 % | 0,4 - 6,0 % | 0,5 - 3 % |
| Vulkanisationsvernetzer | 0 - 2 % | 0 - 1 % | 0 - 0,5 % |
| Zinkoxid | 0,5 - 10 % | 2 - 8 % | 3 - 7 % |
| Phenolharz | 0 - 8 % | 0 - 6 % | 0 - 3 % |
| Dinatriumsalz des Hexamethylen-1,6-bis(thiosulfat) | 0 - 2,5 % | 0,1 - 1,8 % | 0,4 - 1,3 % |
| Antioxydans | 0 - 1,5 % | 0,1 - 1,0 % | 0,2 - 0,7 % |
| Calciumoxid | 0 - 8 % | 1 - 6 % | 2,5 - 5,5 % |
| Ruß | 0 - 4 % | -0,1 - 2 % | 0,2 - 1 % |
| Calciumcarbonat | 10 - 45 % | 15 - 40 % | 25 - 35 % |
| Calciumcarbonat, gecoatet | 0 - 30 % | 5 - 18 % | 3 - 12 % |
| Blockcopolymermischung | 0,05 - 70 % | 1 - 40 % | 2 - 25 % |

Daneben können weitere Füllstoffe wie Graphit, Talkum, Silikate, Tonerden, sowie Fasern und thermoplastische Polymere enthalten sein. Die Summe der Gesamtbestandteile ergänzt sich in jedem Falle zu 100 Gew.-%.

Die erfindungsgemäßen heißhärtenden, reaktiven, einkomponentigen Klebstoffe können wie die bisher bekannten Klebstoffe im Rohbau eingesetzt werden, beispielsweise für Bördelnahtverklebungen oder überlappende Verklebungen. Sie können auf geölte Bleche, wie sie im Automobilrohbau eingesetzt werden, aufgetragen werden. Die Bauteile werden anschließend gefügt. Die erfindungsgemäßen Zusammensetzungen benötigen in der Regel keine Vorhärtungsmechanismen wie Induktionsheizung, Rohbauöfen oder IR-Strahler zur Vorhärtung, da sie wie die bisher bekannten Kautschukzusammensetzungen wäscherbeständig sind. Gegenüber den bisher bekannten Kautschukzusammensetzungen weisen sie eine sehr viel höhere Elastizität auf und sind in der Lage, hohe Energie in Form von Schlagschäl-Arbeit bzw. Schlagschäl-Energie in der Klebstoff-Fuge aufzunehmen. Insbesondere weisen die erfindungsgemäßen Kautschukzusammensetzungen sehr gute Schfagschäl-Eigenschaften im ausgehärteten Zustand auch bei tiefen Temperaturen auf. Diese Eigenschaften sind erwünscht, damit die strukturell geklebten Bauteile auch im Falle eines Unfalls den modernen Sicherheitsanforderungen (Crash-Verhalten) im Fahrzeugbau entsprechen.

Die erfindungsgemäßen Zusammensetzungen können in an sich bekannter Weise in Mischaggregaten mit hoher Scherwirkung hergestellt werden. Hierzu gehören z.B. Kneter, Planetenmischer, Innenmischer, so genannte "Banbury-Mischer" und ähnliche dem Fachmann bekannte Mischaggregate.

In den nachfolgenden Ausführungsbeispielen soll die Erfindung näher erläutert werden, wobei die Auswahl der Beispiele keine Beschränkung des Umfanges des Erfindungsgegenstandes darstellen soll.

### Beispiele

Herstellung von Blockcopolymeren bzw. gepfropften Blockcopolymeren aus Polyenen mit nicht Schwefel-vernetzbaren Polymeren/Thermoplasten:
M1) 800 g Maleinsäureanhydrid modifiziertes cis-1,4-Polybutadien (MW = 2100 g/mol) wurden mit 200 g eines Polyolefinpolyols (Mn = 3500 g/mol) in einem Reaktionsgefäß gemischt. Unter Rühren und Erwärmung auf 85 °C ließ man das Reaktionsgemisch reagieren und kühlte anschließend ab. Es wurde eine opake, viskose Mischung eines Blockcopolyesters erhalten.
M2) 800 g Maleinsäureanhydrid modifiziertes cis-1,4-Polybutadien (MW = 2100 g/mol) wurden mit 200 g eines Polyolefinpolyols (Mn = 3500 g/mol) in einem Reaktionsgefäß unter Zugabe von 0,04 % K-Isooctoat gemischt. Unter Rühren erwärmte man auf 85 °C und ließ das Reaktionsgemisch reagieren. Anschließend wurde abgekühlt und es wurde eine opake, viskose Mischung eines Blockcopolyesters erhalten.
S1) 500 g cis-1,4-Polybutadien (Mn = 5000 g/mol) wurden in einem Reaktionsgefäß mit 50 g eines linearen, vinylterminierten Polydimethylsiloxans (Viskosität = 1000 mPas, Vinylgehalt ca. 0,13 mmol/g, Mn ≈ 5200) versetzt. Unter Rühren wurden 0,1 % eines geeigneten Peroxids zugegeben und die Mischung für 30 min bei 170 °C unter Stickstoffatmosphäre erhitzt. Es wurde eine opake, viskose Mischung eines Blockcopolymers erhalten.
S2) 300 g cis-1,4-Polybutadien (Mn = 5000 g/mol) wurden in einem Reaktionsgefäß mit 100 g eines linearen, vinylterminierten Polydimethylsiloxans (Viskosität = 1000 mPas, Vinylgehalt ca. 0,13 mmol/g, Mn ≈ 5200) versetzt. Unter Rühren wurden 0,1 % eines geeigneten Peroxids zugegeben und die Mischung für 30 min bei 170 °C unter Stickstoffatmosphäre erhitzt. Es wurde eine opake, viskose Mischung eines Blockcopolymers erhalten.
S3) 500 g cis-1,4-Polybutadien (Mn = 5000 g/mol) wurden in einem Reaktionsgefäß mit 50 g eines linearen, vinylterminierten Polydimethylsiloxans (Viskosität = 200 mPas, Vinylgehalt ca. 0,3 mmol/g Mn ≈ 3300) versetzt. Unter Rühren wurden 0,1 % eines geeigneten Peroxids zugegeben und die Mischung für 30 min bei 170 °C unter Stickstoffatmosphäre erhitzt. Es wurde eine opake, viskose Mischung eines Blockcopolymers erhalten.
S4) 500 g cis-1,4-Polybutadien (Mn = 5000 g/mol) wurden in einem Reaktionsgefäß mit 50 g eines linearen, vinylterminierten Polydimethylsiloxans (Viskosität = 10 Pas, Vinylgehalt ca. 0,3 mmol/g, Mn ≈ 37000) versetzt. Unter Rühren wurden 0,1 % eines geeigneten Peroxids zugegeben und die Mischung für 30 min bei 170 °C unter Stickstoffatmosphäre erhitzt. Es wurde eine opake, viskose Mischung eines Blockcopolymers erhalten.
S5) 500 g cis-1,4-Polybutadien (Mn = 5000 g/mol) wurden in einem Reaktionsgefäß mit 50 g eines linearen, vinylterminierten Polydimethylsiloxans (Viskosität = 165 Pas, Vinylgehalt ca. 0,3 mmol/g, Mn ≈ 90000) versetzt. Unter Rühren wurden 0,1 % eines geeigneten Peroxids zugegeben und die Mischung für 30 min bei 170 °C unter Stickstoffatmosphäre erhitzt. Es wurde eine opake, viskose Mischung eines Blockcopolymers erhalten.
S6) 500 g cis-1,4-Polybutadien (Mn = 5000 g/mol) wurden in einem Reaktionsgefäß mit 50 g eines linearen, vinylterminierten und mit Vinyl-Seitengruppen besetzten Polydimethylsiloxans (Viskosität = 1000 mPas, Vinylgehalt ca. 0,3 mmol/g Mn ≈ 5500) versetzt. Unter Rühren wurden 0,1 % eines geeigneten Peroxids zugegeben und die Mischung für 30 min bei 170 °C unter Stickstoffatmosphäre erhitzt. Es wurde eine opake, viskose Mischung eines Blockcopolymers erhalten.
S7) 500 g cis-1,4-Polybutadien (Mn = 5000 g/mol) wurden in einem Reaktionsgefäß mit 50 g eines linearen, vinylterminierten und mit Vinyl-Seitengruppen besetzten Polydimethylsiloxans (Viskosität = 10 Pas, Vinylgehalt ca. 0,3 mmol/g, Mn ≈ 37800) versetzt. Unter Rühren wurden 0,1 % eines geeigneten Peroxids zugegeben und die Mischung für 30 min bei 170 °C unter Stickstoffatmosphäre erhitzt. Es wurde eine opake, viskose Mischung eines Blockcopolymers erhalten.
S8) 500 g cis-1,4-Polybutadien (Mn = 9000 g/mol) wurden in einem Reaktionsgefäß mit 50 g eines linearen, vinylterminierten Polydimethylsiloxans (Viskosität = 165 Pas, Vinylgehalt ca. 0,3 mmol/g, Mn ≈ 90000) versetzt. Unter Rühren wurden 0,1 % eines geeigneten Peroxids zugegeben und die Mischung für 30 min bei 170 °C unter Stickstoffatmosphäre erhitzt. Es wurde eine opake, viskose Mischung eines Blockcopolymers erhalten.

### Beispiele 1 bis 17: Klebstoffzusammensetzungen

### Beispiele 1 (Vergleich)

| | |
|---|---|
| Polybutadien cis-1,4- (fest) | 2,80 |
| Calciumoxid | 2,50 |
| 2,2-Methylen-bis-(4-methyl-6-tert.-butylphenol) | 0,50 |
| Russ | 0,50 |
| Zinkoxid | 3,00 |
| gefälltes Calciumcarbonat | 20,00 |
| Polybutadienöl (MW = 1800), vinyl 50 % | 19,00 |
| stereospezifisches Polybutadienöl (MW = 1800), vinyl 50 % | 7,55 |
| Schwefel | 6,50 |
| ZMBT | 2,50 |
| Polybutadien mit aktiven Carboxylgruppen (MW = 2100) | 10,00 |
| Calciumcarbonat, gecoatet mit Stearat | 15,00 |
| MBTS | 0,95 |
| Dinatriumsalz des Hexamethylen-1,6-bis(thiosulfat) | 0,50 |
| Mikrohohlkugeln | 0,20 |
| Polyvinylacetat, EVA-Copolymer, T_{g} ca. 40 °C | 8,50 |

Beispiel 2 (Vergleich, freies Polydimethylsiloxan in der Kautschukmischung):

| | |
|---|---|
| Polybutadien cis-1,4- (fest) | 11,3 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 31,3 |
| Calciumcarbonat, gecoatet mit Stearat | 6,65 |
| niedermolekulares Polybutadienöl (MW = 5000), vinyl 15 % | 20,0 |
| MBTS | 0,95 |
| Schwefel | 10,00 |
| bifunktionaler Vernetzer¹⁾ zur Vulkanisation | 0,15 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Polydimethylsiloxan (Mn = 90.000 g/mol) | 2,00 |

Beispiel 3 (erfindungsgemäß):

| | |
|---|---|
| Polybutadien cis-1,4- (fest) | 5,84 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 31,37 |
| Calciumcarbonat, gecoatet mit Stearat | 10,60 |
| niedermolekulares Polybutadienöl (MW = 5000), vinyl 15 % | 21,54 |
| MBTS | 0,95 |
| Schwefel | 7,05 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 4,00 |
| Copolymer M1 | 6,00 |

Beispiel 4 (erfindungsgemaß):

| | |
|---|---|
| Polybutadien cis-1,4- (fest) | 5,84 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 31,37 |
| Calciumcarbonat, gecoatet mit Stearat | 10,60 |
| niedermolekulares Polybutadienöl (MW = 5000), vinyl 15 % | 21,54 |
| MBTS | 0,95 |
| Schwefel | 8,50 |
| Dinatriumsalz des Hexamethylen-1,6-bis(thiosulfat) | 0,50 |
| Phenolharz | 2,50 |
| Polybutadien mit aktiven Carboxylgruppen (MW = 2100) | 4,00 |
| Copolymer M2 | 5,00 |

Beispiel 5 (erfindungsgemäß):

| | |
|---|---|
| Polybutadien cis-1,4- (fest) | 5,84 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 31,37 |
| Calciumcarbonat, gecoatet mit Stearat | 9,15 |
| niedermolekulares Polybutadienöl (MW = 5000), vinyl 15 % | 11,54 |
| MBTS | 0,95 |
| Schwefel | 7,50 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Copolymer S1 | 16,00 |

Beispiel 6 (erfindungsgemäß):

| | |
|---|---|
| Polybutadien cis-1,4- (fest) | 5,84 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 29,87 |
| Calciumcarbonat, gecoatet mit Stearat | 9,15 |
| niedermolekulares Polybutadienöl (MW = 5000), vinyl 15 % | 6,04 |
| MBTS | 0,95 |
| Schwefel | 9,00 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Copolymer S1 | 16,00 |

Beispiel 7 (erfindungsgemäß):

| | |
|---|---|
| Polybutadien cis-1,4- (fest) | 11,34 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 31,37 |
| Calciumcarbonat, gecoatet mit Stearat | 9,15 |
| niedermolekulares Polybutadienöl (MW = 5000), vinyl 15 % | 6,04 |
| MBTS | 0,95 |
| Schwefel | 7,50 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Copolymer S1 | 16,00 |

Beispiel 8 (erfindungsgemäß):

| | |
|---|---|
| Polybutadien cis-1,4- (fest) | 5,84 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 31,37 |
| Calciumcarbonat, gecoatet mit Stearat | 9,15 |
| niedermolekulares Polybutadienöl (MW = 5000), vinyl 15 % | 23,34 |
| MBTS | 0,95 |
| Schwefel | 7,50 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Copolymer S2 | 4,20 |

Beispiel 9 (erfindungsgemäß):

| | |
|---|---|
| Polybutadien cis-1,4- (fest) | 5,84 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 27,78 |
| Calciumcarbonat, gecoatet mit Stearat | 9,15 |
| niedermolekulares Polybutadienöl (MW = 5000), vinyl 15 % | 7,54 |
| MBTS | 0,95 |
| Schwefel | 10,00 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Copolymer S4 | 21,00 |

Beispiel 10 (erfindungsgemäß):

| | |
|---|---|
| Polybutadien cis-1,4- (fest) | 11,34 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 31,37 |
| Calciumcarbonat, gecoatet mit Stearat | 9,15 |
| niedermolekulares Polybutadienöl (MW = 5000), vinyl 15 % | 14,54 |
| MBTS | 0,95 |
| Schwefel | 10,00 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Copolymer S2 | 5,00 |

Beispiel 11 (erfindungsgemäß):

| | |
|---|---|
| Polybutadien cis-1,4- (fest) | 11,34 |
| Calciumoxid | 4,20 |
| 2,2-Methylen-bis-(4-methyl-6-tert.-butytphenol) | 0,50 |
| Russ | 0,50 |
| Zinkoxid | 4,00 |
| gefälltes Calciumcarbonat | 31,37 |
| Calciumcarbonat, gecoatet mit Stearat | 6,65 |
| niedermolekulares Polybutadienöl (MW = 5000), vinyl 15 % | 6,04 |
| MBTS | 0,95 |
| Schwefel | 10,00 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Copolymer S5 | 16,00 |

Beispiel 12 (erfindungsgemäß):

| | |
|---|---|
| Polybutadien cis-1,4- (fest) | 11,34 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 31,37 |
| Calciumcarbonat, gecoatet mit Stearat | 6,65 |
| niedermolekulares Polybutadienöl (MW = 5000), vinyl 15 % | 6,04 |
| MBTS | 0,95 |
| Schwefel | 10,00 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Copolymer S6 | 16,00 |

Beispiel 13 (erfindungsgemäß):

| | |
|---|---|
| Polybutadien cis-1,4- (fest) | 11,34 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 31,37 |
| Calciumcarbonat, gecoatet mit Stearat | 6,65 |
| niedermolekulares Polybutadienöl (MW = 5000), vinyl 15 % | 6,04 |
| MBTS | 0,95 |
| Schwefel | 10,00 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Copolymer S7 | 16,00 |

Beispiel 14 (erfindungsgemäß):

| | |
|---|---|
| Polybutadien cis-1,4- (fest) | 11,34 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 31,37 |
| Calciumcarbonat, gecoatet mit Stearat | 6,65 |
| niedermolekulares Polybutadienöl (MW = 5000); vinyl 15 % | 6,04 |
| MBTS | 0,95 |
| Schwefel | 10,00 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Copolymer S5 | 8,00 |
| Copolymer S6 | 8,00 |

Beispiel 15 (erfindungsgemäß):

| | |
|---|---|
| Polybutadien cis-1,4- (fest) | 11,34 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 31,22 |
| Calciumcarbonat, gecoatet mit Stearat | 6,65 |
| niedermolekulares Polybutadienöl (MW = 5000), vinyl 15 % | 6,04 |
| MBTS | 0,95 |
| Schwefel | 10,00 |
| bifunktionaler Vernetzer¹⁾ zur Vulkanisation | 0,15 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Copolymer S8 | 16,00 |

Beispiel 16 (erfindungsgemäß):

| | |
|---|---|
| Polybutadien cis-1,4- (fest) | 11,34 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 30,12 |
| Calciumcarbonat, gecoatet mit Stearat | 6,65 |
| niedermolekulares Polybutadienöl (MW = 5000), vinyl 15 % | 6,04 |
| MBTS | 0,95 |
| Schwefel | 11,00 |
| bifunktionaler Vernetzer¹⁾ zur Vulkanisation | 0,25 |
| Dinatriumsalz des Hexamethylen-1,6-bis(thiosulfat) | 0,95 |
| Phenolharz | 2,50 |
| Polybutadien mit aktiven Carboxylgruppen (MW = 2100) | 5,00 |
| Copolymer S6 | 22,04 |

Beispiel 17 (erfindungsgemäß):

| | |
|---|---|
| Polybutadien cis-1,4- (fest) | 2,8 |
| Calciumoxid | 4,20 |
| 2,2-Methylen-bis-(4-methyl-6-tert.-butylphenol) | 0,50 |
| Russ | 0,50 |
| Zinkoxid | 4,00 |
| gefälltes Calciumcarbonat | 31,22 |
| Calciumcarbonat, gecoatet mit Stearat | 6,65 |
| niedermolekulares Polybutadienöl (MW = 5000), vinyl 15 % | 6,83 |
| MBTS | 1,2 |
| Schwefel | 11,50 |
| bifunktionaler Vernetzer¹⁾ zur Vulkanisation | 0,15 |
| Dinatriumsalz des Hexamethylen-1 ,6-bis(thiosulfat) | 0,95 |
| Phenolharz | 2,50 |
| Polybutadien mit aktiven Carboxylgruppen (MW = 2100) | 8,00 |
| Polybutadien-Polydimethylsiloxan-Copolymer (Fa. Wacker Chemie) | 19,0 |

| | |
|---|---|
| ¹⁾ 1,6-bis(N,N-dibenzylthiocarbamoyldithio)-hexan | |

Mit den vorbeschnebenen Kautschukzusammensetzungen der Beispiele 1 bis 17 wurden Prüfkörper aus Stahlblech für die Bestimmung der Zugscherfestigkeit sowie der Schlagschälfestigkeit (impact peel energy) angefertigt. Dabei die Prüfkörper zum Aushärten der Klebstoffmischung für 25 Minuten bei 175°C im Umlufttrockenschrank ausgehartet. Die Messergebnisse der Zugscherfestigkeit bei Raumtemperatur sowie der Schlagschälfestigkeit nach ISO 11343 bei Raumtemperatur, -20°C und -40°C sind in der nachfolgenden Tabelle aufgeführt.

| **Beispiel** | **Zugscherfestigkeit [MPa] 25x12,5x0,2 mm** | **Impact peel Energy, RT (ISO 11343)** | **Impact peel Energy, -20 °C (ISO 11343)** | **Impact peel Energy, -40 °C (ISO 11343)** |
|---|---|---|---|---|
| 1 (Vergleich) | 16,2 MPa | ∼ 3 J | ∼ 1,5 J | ∼ 1,0 J |
| 2 (Vergleich) | 16,1 MPa | 18,3 J | 4,2 J | 0,8 J |
| 3 | 12,5 MPa | 12,5 J | 14 J | 2,2 J |
| 4 | 16,8 MPa | 27,0 J | 5,9 J | 3,2 J |
| 5 | 14,1 MPa | 23,0 J | 26,0 J | 9,0 J |
| 6 | 15,9 MPa | 19,3 J | 15,7 J | 8,7 J |
| 7 | 13.2 MPa | 20.3 J | 24,3 J | 13.8 J |
| 8 | 12,7 MPa | 19,0 J | 24,2 J | 14,9 J |
| 9 | 15,8 MPa | 18,1 J | 5,6 J | 4,1 J |
| 10 | 17,8 MPa | 18,1 J | 7,9 J | 5,1 J |
| 11 | 18,6 MPa | 24,8 J | 14,6 J | 11,2 J |
| 12 | 17,4 MPa | 23,1 J | 17,5 J | 10,6 J |
| 13 | 18,3 MPa | 22,1 J | 18,2 J | 7,9 J |
| 14 | 20.1 MPa | 28.7 J | 12,2 J | 6.2 J |
| 15 | 17,1 MPa | 23,9 J | 11,5 J | 4,7 J |
| 16 | 22,1 MPa | 24,1 J | 9,6 J | 4,4 J |
| 17 | 23,3 MPa | 20,7 J | 10,5 J | 9,0 J |

Aus den Zugscherfestigkeiten und den Schlagschälarbeiten der vorstehenden Tabelle wird deutlich, dass die erfindungsgemäßen Klebstoffzusammensetzungen gegenüber vergleichbaren Kautschukzusammensetzungen des Standes der Technik sowohl hohe Zugscherfestigkeiten gewährleisten als auch hohe Schlagschälarbeiten, insbesondere bei tiefen Temperaturen wie -20°C oder -40°C.

## Patentansprüche

1. Einkomponentige, heißhärtende reaktive Zusammensetzung auf der Basis von natürlichen und/oder synthetischen olefinische Doppelbindungen enthaltenden Elastomeren und Vulkanisationsmitteln, **dadurch gekennzeichnet, dass** sie
a) mindestens ein flüssiges Polyen mit einem Molekulargewicht zwischen 400 und 80.000, vorzugsweise zwischen 800 und 25.000,
b) mindesten ein Blockcopolymer mit mindestens einem Polyenblock und mindestens einem gesättigten Block und
c) ein Vulkanisationssystem aus Schwefel und Beschleunigern und/oder Chinonoximen
enthalten.

2. Einkomponentige, heißhärtende reaktive Zusammensetzung nach Anspruch 1, **dadurch gekennzeichnet, dass** der gesättigte Block des Blockcopolymers b) eine Glasübergangstemperatur von niedriger als - 30°C aufweist.

3. Einkomponentige, heißhärtende reaktive Zusammensetzung nach Anspruch 1 oder 2, **dadurch gekennzeichnet, dass** der gesättigte Block des Blockcopolymers b) aus EPDM-, EVA-, Polyether-, Polyester-, Polyamid-, Polyimid-, Polyurethan-, Polyacrylat-, Polystyrol- Einheiten oder Einheiten auf der Basis von hydrierten Acrylnitril-Butadien-Styrol-Copolymeren aufgebaut ist.

4. Einkomponentige, heißhärtende reaktive Zusammensetzung nach Anspruch 1 oder 2, **dadurch gekennzeichnet, dass** der gesättigte Block des Blockcopolymers b) aus Polyoxyalkylen-, Polydialkylsiloxan-, Polydiarylsiloxan-, Polyalkyl-arylsiloxan-, polyethermodifizierten Polydimethylsiloxan-, Poly(ethylen-propylen)-, Poly(ethylen-butylen)- oder Polyisobutylen-Einheiten, SEPS-(Styrol-Ethylen-Propylen-Styrol)-, SEEPS-(Styrol-Ethylen-Ethylen-Propylen-Styrol)- oder SEBS-(Styrol-Ethylen-Butylen-Styrol)-Copolymer-Einheiten aufgebaut ist.

5. Einkomponentige, heißhärtende reaktive Zusammensetzung nach mindestens einem der Ansprüche 1 bis 4, **dadurch gekennzeichnet, dass** der ungesättigte Block des Blockcopolymers b) aus Polybutadien-, Polyisopren-, oder Butylkautschuk- Einheiten, sowie Copolymer-Einheiten des Butadiens und/oder Isoprens mit Styrol und/oder Acrylnitril, Copolymer-Einheiten von Acrylsäureestern mit Dienen aufgebaut ist.

6. Einkomponentige, heißhärtende reaktive Zusammensetzung nach mindestens einem der Ansprüche 1 bis 5, **dadurch gekennzeichnet, dass** der ungesättigte Block des Blockcopolymers b) einen Molekulargewichtsbereich von 800 bis 15 000, vorzugsweise zwischen 1200 und 9000 aufweist.

7. Einkomponentige, heißhärtende reaktive Zusammensetzung nach mindestens einem der Ansprüche 1 bis 5, **dadurch gekennzeichnet, dass** der gesättigte Block des Blockcopolymers b) einen Molekulargewichtsbereich von 500 bis 90 000, vorzugsweise zwischen 1000 und 40 000 aufweist.

8. Einkomponentige, heißhärtende reaktive Zusammensetzung nach mindestens einem der vorhergehenden Ansprüche, **dadurch gekennzeichnet, dass** das Blockcopolymer b) hergestellt wird durch Umsetzung eines Maleinsäureanhydridmodifizierten Polybutadiens mit einem Polydialkylsiloxan mit endständigen Hydroxyl- oder Amino- Gruppen, Polydiarylsiloxan mit endständigen Hydroxyl- oder Amino- Gruppen, Polyalkyl-arylsiloxan mit endständigen Hydroxyl- oder Amino- Gruppen, Polyoxyalkylendiol, OH-terminierten Polyolefin, insbesondere einem Poly(ethylen-propylen)- Poly(ethylen-butylen)- oder Polyisobutylen-diol.

9. Einkomponentige, heißhärtende reaktive Zusammensetzung nach mindestens einem der Ansprüche 1 bis 7, **dadurch gekennzeichnet, dass** das Blockcopolymer b) hergestellt wird durch Umsetzung eines Polybutadiens mit einem endständig und/oder seitenkettenständig Vinylgruppen und/oder Acrylatgruppen enthaltenden Polydialkylsiloxan, Polydiarylsiloxan oder Polyalkyl-arylsiloxan.

10. Einkomponentige, heißhärtende reaktive Zusammensetzung nach mindestens einem der vorhergehenden Ansprüche, **gekennzeichnet durch** zusätzlichen Gehalt an mindestens einem Festkautschuk aus der Gruppe cis-1,4-Polybutadien, Styrol-Butadien-Kautschuk, synthetischer Isoprenkautschuk, Naturkautschuk, Ethylen-Propylen-Dien-Kautschuk (EPDM), Nitrilkautschuk, Butylkautschuk, Acrylkautschuk oder Polychloropren.

11. Einkomponentige, heißhärtende reaktive Zusammensetzung nach mindestens einem der vorhergehenden Ansprüche, **gekennzeichnet durch** zusätzlichen Gehalt an mindestens einem thermoplastischen Polymerpulver.

12. Heißhärtende Zusammensetzung nach mindestens einem der vorhergehenden Ansprüche, **dadurch gekennzeichnet, dass** zur Härtung ein Vulkanisationssystem aus Schwefel, organischen Vulkanisationsbeschleunigern und Zinkverbindungen verwendet wird.

13. Heißhärtende Zusammensetzung gemäß Anspruch 12, **dadurch gekennzeichnet, dass** das Vulkanisationssystem aus 4 Gew.-% bis 25 Gew.-%, vorzugsweise 5 Gew.-% bis 15 Gew.-% pulverförmigem Schwefel, 0,25 Gew.-% bis 8 Gew.-%, vorzugsweise 0,4 Gew.-% bis 6 Gew.-% organischem Beschleuniger und 0,5 Gew.-% bis 10 Gew.%, vorzugsweise 1 Gew.-% bis 8 Gew.-% Zinkverbindungen, vorzugsweise Zinkoxid, besteht, wobei die Gew.% auf die Gesamtzusammensetzung bezogen sind.

14. Zusammensetzung nach mindestens einem der vorhergehenden Ansprüche, **dadurch gekennzeichnet, dass** sie zusätzlich Füllstoffe, Rheologiehilfsmittel, Extenderöle, Treibmittel, Pigmente, Haftvermittler und/oder Alterungsschutzmittel enthält.

15. Verwendung der Zusammensetzung nach mindestens einem der vorhergehenden Ansprüche als einkomponentigen Klebstoff, Dichtstoff oder Beschichtungsmasse im Automobilrohbau.

## Claims

1. A single-component high-temperature-curing reactive composition based on natural and/or synthetic elastomers having olefinic double bonds and on vulcanizing agents, **characterized in that** it contains
a) at least one liquid polyene with a molecular weight between 400 and 80,000, by preference between 800 and 25,000,
b) at least one block copolymer with at least one polyene block and at least one saturated block,
c) a vulcanizing system with sulfur and accelerators and/or quinone oximes.

2. The single-component high-temperature-curing reactive composition according to Claim 1, **characterized in that** the saturated block of the block copolymer b) has a glass transition temperature of less than -30°C.

3. The single-component high-temperature-curing reactive composition according to Claim 1 or 2, **characterized in that** the saturated block of the block copolymer b) is made of EPDM, EVA, polyether, polyester, polyamide, polyimide, polyurethane, polyacrylate, polystyrene units or units based on hydrogenated acrylonitrile-butadiene-styrene copolymers.

4. The single-component high-temperature-curing reactive composition according to Claim 1 or 2, **characterized in that** the saturated block of the block copolymer b) is made of polyoxyalkylene, polydialkylsiloxane, polydiarylsiloxane, polyalkylarylsiloxane, polyether-modified polydimethylsiloxane, poly(ethylene-propylene), poly(ethylene-butylene) or polyisobutylene units, SEPS (styrene-ethylene-propylene-styrene), SEEPS (styrene-ethylene-ethylene-propylene-styrene) or SEBS (styrene-ethylene-butylene-styrene) copolymer units.

5. The single-component high-temperature-curing reactive composition according to at least one of Claims 1 to 4, **characterized in that** the unsaturated block of the block copolymer b) is made of polybutadiene, polyisoprene or butyl rubber units as well as copolymer units of butadiene and/or isoprene with styrene and/or acrylonitrile, copolymer units of acrylic acid esters with dienes.

6. The single-component high-temperature-curing reactive composition according to at least one of Claims 1 to 5, **characterized in that** the unsaturated block of the block copolymer b) has a molecular weight range from 800 to 15,000, by preference between 1200 and 9000.

7. The single-component high-temperature-curing reactive composition according to at least one of Claims 1 to 5, **characterized in that** the saturated block of the block copolymer b) has a molecular weight range from 500 to 90,000, by preference between 1000 and 40,000.

8. The single-component high-temperature-curing reactive composition according to at least one of the preceding claims, **characterized in that** the block polymer b) is prepared by reacting a maleic anhydride-modified polybutadiene with a polydialkylsiloxane with terminal hydroxyl or amino groups, polydiarylsiloxane with terminal hydroxyl or amino groups, polyalkylarylsiloxane with terminal hydroxyl or amino groups, polyoxyalkylenediol, OH-terminated polyolefin, in particular a poly(ethylene-propylene)-diol, poly(ethylene-butylene)-diol or polyisobutylenediol.

9. The single-component high-temperature-curing reactive composition according to at least one of Claims 1 to 7, **characterized in that** the block copolymer b) is prepared by reacting a polybutadiene with a polydialkylsiloxane, polydiarylsiloxane or polyalkylarylsiloxane containing terminal and/or side chain vinyl groups and/or acrylate groups.

10. The single-component high-temperature-curing reactive composition according to at least one of the preceding claims, having an additional content of at least one solid rubber from the group of cis-1,4-polybutadiene, styrene-butadiene rubber, synthetic isoprene rubber, natural rubber, ethylene-propylene-diene rubber (EPDM), nitrile rubber, butyl rubber, acrylic rubber or polychloroprene.

11. The single-component high-temperature-curing reactive composition according to at least one of the preceding claims, having an additional content of at least one thermoplastic polymer powder.

12. The high-temperature-curing composition according to at least one of the preceding claims, **characterized in that** a vulcanizing system of sulfur, organic vulcanizing accelerators and zinc compounds is used for curing.

13. The high-temperature-curing composition according to Claim 12, **characterized in that** the vulcanizing system consists of 4wt% to 25wt% by preference 5wt% to 15wt% powdered sulfur, 0.25wt% to 8wt% by preference 0.4wt% to 6wt% organic accelerator and 0.5wt% to 10wt% by preference 1wt% to 8wt% zinc compounds, by preference zinc oxide, the wt% being based on the total composition.

14. The composition according to at least one of the preceding claims, **characterized in that** it additionally contains fillers, rheology adjuvants, extender oils, blowing agents, pigments, adhesion promoters and/or aging protection agents.

15. Use of the composition according to at least one of the preceding claims as a single-component adhesive, sealant or coating compound in automobile body manufacture.

## Revendications

1. Composition réactive thermodurcissable à un seul composant à base d'agents de vulcanisation et d'élastomères naturels et/ou synthétiques contenant des liaisons doubles oléfiniques, **caractérisée en ce qu'**elle contient :
a) au moins un polyène liquide dont le poids moléculaire se situe entre 400 et 80.000, de préférence entre 800 et 25.000 ;
b) au moins un copolymère séquencé comprenant au moins une séquence de polyène et au moins une séquence saturée ; et
c) un système de vulcanisation constitué par du soufre et des accélérateurs et/ou des quinonoximes.

2. Composition réactive thermodurcissable à un seul composant selon la revendication 1, **caractérisée en ce que** la séquence saturée du copolymère séquencé b) présente une température de transition vitreuse inférieure à -30 °C.

3. Composition réactive thermodurcissable à un seul composant selon la revendication 1 ou 2, **caractérisée en ce que** la séquence saturée du copolymère séquencé b) se compose d'unités de EPDM, de EVA, de polyéther, de polyester, de polyamide, de polyimide, de polyuréthane, de polyacrylate, de polystyrène, ou d'unités à base de copolymères hydrogénés d'acrylonitrile-butadiène-styrène.

4. Composition réactive thermodurcissable à un seul composant selon la revendication 1 ou 2, **caractérisée en ce que** la séquence saturée du copolymère séquencé b) se compose d'unités de polyoxyalkylène, de polydialkylsiloxane, de polydiarylsiloxane, de polyalkylarylsiloxane, de polydiméthylsiloxane modifié par un polyéther, d'un polymère d'éthylène-propylène, d'un polymère d'éthylène-butylène ou de polyisobutylène, d'unités d'un copolymère SEPS (styrène-éthylène-propylène-styrène), d'un copolymère SEEPS (styrène-éthylène-éthylène-propylène-styrène) ou d'un copolymère SEBS (styrène-éthylène-butylène-styrène).

5. Composition réactive thermodurcissable à un seul composant selon au moins une des revendications 1 à 4, **caractérisée en ce que** la séquence insaturée du copolymère séquencé b) se compose d'unités de polybutadiène, de polyisoprène ou de caoutchouc butyle, et d'unités de copolymères du butadiène et/ou de l'isoprène avec du styrène et/ou de l'acrylonitrile, d'unités de copolymères d'esters d'acide acrylique avec des diènes.

6. Composition réactive thermodurcissable à un seul composant selon au moins une des revendications 1 à 5, **caractérisée en ce que** la séquence insaturée du copolymère séquencé b) présente une plage du poids moléculaire de 800 à 15.000, de préférence entre 1.200 et 9.000.

7. Composition réactive thermodurcissable à un seul composant selon au moins une des revendications 1 à 5, **caractérisée en ce que** la séquence saturée du copolymère séquencé b) présente une plage du poids moléculaire de 500 à 90.000, de préférence entre 1.000 et 40.000.

8. Composition réactive thermodurcissable à un seul composant selon au moins une des revendications précédentes, **caractérisée en ce qu'**on prépare le copolymère séquencé b) par la mise en réaction d'un polybutadiène modifié avec un anhydride de l'acide maléique avec un polydialkylsiloxane comprenant des groupes terminaux hydroxyle ou amino, un polydiarylsiloxane comprenant des groupes terminaux hydroxyle ou amino, un polyalkylarylsiloxane comprenant des groupes terminaux hydroxyle ou amino, un polyoxyalkylènediol, une polyoléfine à terminaison OH, en particulier avec un polyéthylène-propylène-diol, un polyéthylène-butylène-diol ou un polyisobutylène-diol.

9. Composition réactive thermodurcissable à un seul composant selon au moins une des revendications 1 à 7, **caractérisée en ce qu'**on prépare le copolymère séquencé b) par mise en réaction d'un polybutadiène avec un polydialkylsiloxane, un polydiarylsiloxane ou un polyalkylarylsiloxane dont les terminaisons et/ou les chaînes latérales contiennent des groupes vinyle et/ou des groupes acrylate.

10. Composition réactive thermodurcissable à un seul composant selon au moins une des revendications précédentes, **caractérisée par** une teneur supplémentaire en au moins un caoutchouc solide choisi parmi le groupe du cis-1,4-polybutadiène, du caoutchouc de styrène-butadiène, du caoutchouc d'isoprène synthétique, du caoutchouc naturel, du caoutchouc d'éthylène-propylène-diène (EPDM), du caoutchouc nitrile, du caoutchouc butyle, du caoutchouc acrylique ou du polychloroprène.

11. Composition réactive thermodurcissable à un seul composant selon au moins une des revendications précédentes, **caractérisée par** une teneur supplémentaire en au moins une poudre polymère thermoplastique.

12. Composition thermodurcissable selon au moins une des revendications précédentes, **caractérisée en ce qu'**on utilise pour le durcissement un système de vulcanisation constitué par du soufre, des accélérateurs de la vulcanisation de type organique et des composés du zinc.

13. Composition thermodurcissable selon la revendication 12, **caractérisée en ce que** le système de vulcanisation est constitué par : de 4 % en poids à 25 % en poids, de préférence de 5 % en poids à 15 % en poids de soufre pulvérulent ; de 0,25 % en poids à 8 % en poids, de préférence de 0,4 % en poids à 6 % en poids d'un accélérateur organique ; et de 0,5 % en poids à 10 % en poids, de préférence de 1 % en poids à 8 % de composés du zinc, de préférence d'oxyde de zinc, les % en poids se rapportant à la composition totale.

14. Composition selon au moins une des revendications précédentes, **caractérisée en ce qu'**elle contient en outre des matières de charge, des adjuvants de la rhéologie, des huiles plastifiantes, les agents moussants, des pigments, des agents améliorant l'adhérence et/ou des agents de protection contre le vieillissement.

15. Utilisation de la composition selon au moins une des revendications précédentes, à titre d'adhésif, de substance d'étanchéisation ou de matière d'enduction à un seul composant dans la construction de carrosseries automobiles.
